# EUROPEAN PATENT APPLICATION

(11) **EP 1 261 205 A2**
(43) Date of publication of application: **27.11.2002**
(21) Application number: 02076467.6
(22) Date of filing: 12.04.2002
(51) Int. Cl.: H04N 7/24

(54) **Animation security method**

(30) Priority: 24.04.2001 US 841411
(71) Applicant: EASTMAN KODAK COMPANY, Rochester, New York 14650 (US)
(72) Inventor: Stephany, Thomas Michael, Rochester, New York 14650-2201 (US); Squilla, John R., Rochester, New York 14650-2201 (US); Olson, Donald Edward, Rochester, New York 14650-2201 (US)
(74) Representative: Nunney, Ronald Frederick Adolphe

(57) **Abstract**

A method of securing an animation service. The method comprises providing a requestor with an identifier; associating the identifier with an identity of the requestor; associating the identity and identifier with the animation service; using the identity to retrieve the animation service; requesting the identifier from the requestor; and providing the animation service to the requestor after verifying the association of the identifier and the identity.

## Description

The present invention relates generally to photography and image processing, and more particularly, to a method of securing an animation.

Techniques have been developed for creating photorealistic textured 3D facial models from photographs of a human subject, and for creating smooth transitions between different facial expressions by morphing between these different models. For example, refer to "Synthesizing Realistic Facial Expressions from Photographs" by Pighin et al, SIGGRAPH 98, Computer Graphics Proceedings, Annual Conference Series, 1998, pages 75-83, incorporated herein by reference. As referenced in this paper, attempts to model and animate realistic human faces date back to the early 1970's.

While some may readily embrace this 3D modeling, others may be concerned about the creation of a 3D facial model of their likeness. For example, if a service provider is able to create a 3D facial model of an individual from a photograph, the individual may want to control the creation, access, and use of the 3D facial model of their likeness.

Accordingly, a need exists for a method of controlling and securing the creation of, and access to, a facial animation.

An object of the present invention is to provide a method of securing an animation service.

Another object of the invention is to provide such a method to verify a request for an animation service.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of securing an animation service. The method comprises providing a requestor with an identifier; associating the identifier with an identity of the requestor; associating the identity and identifier with the animation service; using the identity to retrieve the animation service; requesting the identifier from the requestor; and providing the animation service to the requestor after verifying the association of the identifier and the identity.

According to another aspect of the invention, there is provided a method of securing an animation service of an image. The method comprises the steps of requesting an identity of the requestor; requesting a verification of the identity of the requestor; requesting a verification of the image; associating the identity with the animation service; using the identity to retrieve the animation service; and providing the animation service to the requestor.

According to yet another aspect of the invention, there is provided a method of securing an animation service of an image. The method comprises the steps of requesting an identity of a requestor; verifying the identity of the requestor; providing the requestor with an identifier; associating the identifier with the identity of the requestor; requesting a verification of the image; associating the identity with the animation service; retrieving the animation service using the identity; and providing the animation service to the requestor after requesting the identifier from the requestor and verifying the association of the identifier and the identity.

According to still another aspect of the invention, there is provided a method of securing an animation service. The method comprises the steps of capturing an image of a subject using an image capture device, the image being captured by a photographer; requesting an animation service of the image; providing a verification of the image, the verification being provided by the photographer; and providing the animation service to the subject.

According to further aspect of the invention, there is provided a method of securing an animation service. The method comprises the steps of capturing an image of a subject using an image capture device, the image being captured by an photographer; requesting an animation service of the image, the subject requesting the animation service; providing a verification of the request for the animation service, the verification of the request being provided by the subject; providing a verification of the image, the verification of the image being provided by the photographer; and providing the animation service to the subject.

The present invention provides a method of securing an animation service.

The foregoing and other objects, features, and advantages of the invention will be apparent from the following more particular description of the preferred embodiments of the invention, as illustrated in the accompanying drawings.
FIG. 1 shows a flow diagram of a first embodiment of a method in accordance with the present invention.
FIG. 2 shows a flow diagram of a second embodiment of a method in accordance with the present invention, wherein an identifier is not employed.
FIG. 3 shows a flow diagram of the second embodiment of the method in accordance with the present invention, wherein an identifier is employed.
FIG. 4 shows a flow diagram of a third embodiment of a method in accordance with the present invention.
FIG. 5 shows a flow diagram of the third embodiment of the method in accordance with the present invention, further comprising the step of providing a verification of the animation service request.

The following is a detailed description of the preferred embodiments of the invention, reference being made to the drawings in which the same reference numerals identify the same elements of structure in each of the several figures.

A facial animation may be created/generated by the individual or another person. For example, Person A may desire a facial animation of herself. To obtain the facial animation, Person A may either (1) create the facial animation herself or (2) provide a Person B with a photograph of herself, and request that Person B create/generate the facial animation.

Person B may by well-known to Person A, for example, a friend. Alternatively, Person B may not be known to Person A. For example, Person B could be a service provider. The service provider could be local, such as a local, photoprocessing store, or professional photostudio. Or the service provider could be non-local, such an internet service/provider or mail-order photoprocessing.

For ease of discussion, the creation/generation of a facial animation will be referred to as an animation service. As indicated above, a service provider or other party can provide such an animation service, for example, a mass/food/drug store, photoprocessing store, professional photostudio, an internet service/provider, or mail-order photoprocessor.

When obtaining the facial animation from Person B, Person A may desire that certain safe-guards/precautions/security measures be taken in the creation and deliverance of the facial animation. For example, to ensure that solely Person A receives the facial animation, Person B might request photo identification of Person A at time of delivery. Similarly, to ensure that Person A is indeed requesting a facial animation, Person B might request a signature from Person A verifying the facial animation request.

Dependent on varying circumstances, a varying level of security may be desired by either Person A or Person B. For example, if Person B is a close friend of Person A, payment for the facial animation may be sufficient security for Persons A and B. However, if Person B is a local drugstore, Person B might request a signature from Person A verifying the facial animation request. Similarly, if the content of the facial animation is personal/confidential, Person A may desire a higher level of security, such as photo identification and a password.

Accordingly, when requesting an animation service, various levels of security may be desired. A first level of security may be desired, for example, when requesting an animation service electronically, such as on-line, over the internet. A second level of security may be desired, for example, when requesting an animation service at a mass/food/drug store. A third level of security may be desired, for example, when requesting an animation service from a professional photo studio. Those skilled in the art will recognize that other levels of security may be desired, and may be devised by implementing, in various combinations, aspects of the first/second/third levels described herein.

Those skilled in the art will recognize that the image provided for the animation service is a digital still image. The digital still image may be captured in a digital form, such as by a digital camera or camcorder, and provided in digital form, such as on a floppy disk, memory card, or CD. Alternatively, the digital still image can be generated using a scanner or other device for capturing images and converting the image for storage in digital form.

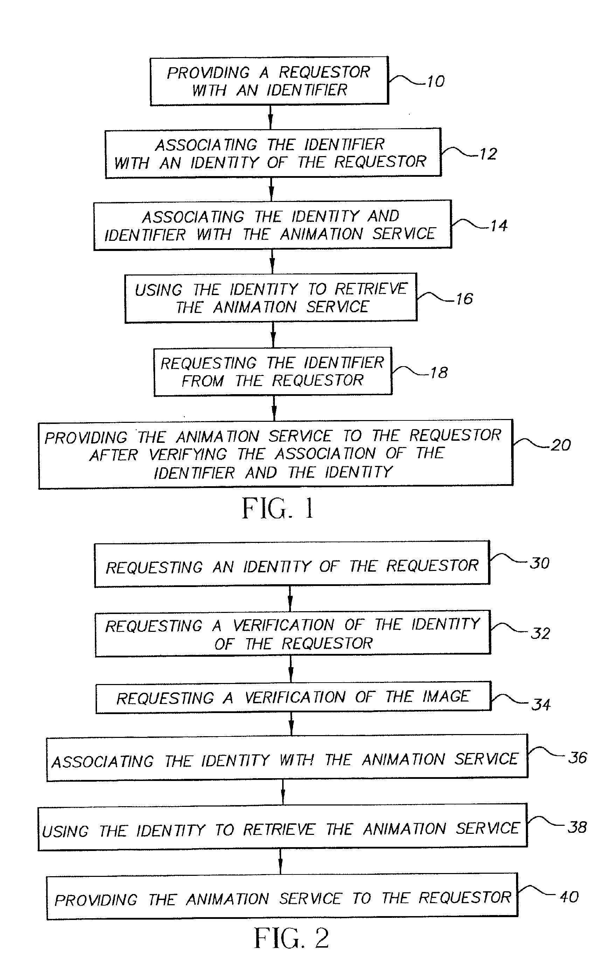

Referring now to Figure 1, a first embodiment is now described directed to a method of securing an animation service wherein a first level of security is desired. This first level is directed to an animation service requested electronically, such as by means of the internet. The method illustrated in Figure 1 provides a method of verifying a request for an animation service.

In this first embodiment directed to an animation service requested on-line, Person A (hereinafter, the requestor) logs onto a website of an on-line service provider (hereinafter, Online Service Provider). The website may provide various options in the creation/generation of the facial animation, and accordingly, the requestor may browse among the animation services available. The options might include, for example, services that would permit the requestor to talk and provide a special greeting, such as a birthday message.

The requestor requests an animation service. Once requested, the Online Service Provider would request the identity of the requestor by requesting personally-identifiable information. This personally-identifiable information could include a name, mailing address, phone number, electronic mailing address, hobby information, and payment information. The personally-identifiable information could also comprise a copy of a document such as a driver license to provide an increased level of confidence of the information submitted by the requestor. The personally-identifiable information could be provided by means of a form, and the requestor would complete the form and submit it to the Online Service Provider, either in paper form or electronic form

After submission of the personally-identifiable information, the Online Service Provider would provide the requestor with an identifier ID (step 10). Identifier ID could be provided on-line, or alternatively, provided to the requestor by mail. Identifier ID may be comprised of alphanumeric or iconic characters, and is preferably unique.

Upon receipt of identifier ID, the requestor may optionally modify identifier ID provided, for example, to change the supplied identifier ID to something personal to the requestor.

Identifier ID is associated with the identity of the requestor (step 12). Further, Identifier ID and the identity of the requestor is associated with the animation service requested (step 14).

When the animation service has been completed, the requestor may obtain the facial animation on-line, i.e., electronically. Upon logging into the website of the Online Service Provider, the requestor would provide the requestor's identity, and the identity would be used to retrieve the animation service (step 16). Identifier ID would also be provided by the requestor (step 18), and the Online Service Provider would provide the animation service to the requestor after verifying the association of the identifier and the identity (step 20).

Note that the requestor may or may not be the subject of the facial animation requested by the animation service.

A second embodiment is now described directed to a method of securing an animation service wherein a second level of security is defined.

A second level of security may be desired, for example, when requesting an animation service at a merchandiser or mass/food/drug store (hereinafter, the store), such as a KMART, WALMART, CVS, and ECKERDS. The second embodiment may or may not employ identifier ID. As with the first embodiment, the requestor may or may not be the subject of the facial animation requested by the animation service.

The second embodiment illustrated in Figure 2 does not employ identifier ID. The requestor visits the store and request the animation service.

The store may provide various options in the creation/generation of the facial animation, and accordingly, the requestor may browse among the animation services available. The options might include, for example, services that would permit the requestor to talk and provide a special greeting, such as a birthday message.

Once the animation service is requested, the store would request the identity of the requestor (step 30) by requesting personally-identifiable information. As discussed above, the personally-identifiable information could include a name, mailing address, phone number, electronic mailing address, drivers license, hobby information, and payment information. The personally-identifiable information could be provided by means of a form, and the requestor would complete the form and submit it to the store, either in paper form or electronic form.

The store would then request a verification of the identity of the requestor (step 32). This verification may be, for example, a drivers license, photo identification, credit cart, bank statement, birth certificate, or passport. Though preferably, the verification includes both the requestor's name and an image.

The store would then request a verification of the image (step 34) of which the animation service is being requested. The step of requesting the verification of the image can comprise providing a signed statement indicating ownership of the image. The signed statement might be notarized. It might be signed by the requestor or by a subject of the image. Alternatively, the step of requesting the verification of the image can comprise providing an oral statement indicating ownership of the image. The oral statement might be made by the requestor or by a subject of the image.

A verification of the image might comprise a review of the copyright ownership of the image. The store might view the image to determine whether the copyright of the image is owned by a professional photographer. Searching for various types of watermarks, embossed emblems or other identifiers may provide a determination. The requestor can verify their ownership of copyright by providing proof such as signed statements or notarized documents. When the requestor is not the copyright owner of the image, the copyright owner can provide permission for release of the copyright, both in written or verbal form.

The identity of the requestor is associated with the animation service (step 36). When the animation service has been completed, the requestor visits the store and provides the requestor's identity to the store. The store uses the identity to retrieve the animation service (step 38), and the animation service is provided to the requestor (step 40).

The second embodiment illustrated in Figure 2 might further comprise the step of associating the verification of the image with the animation service. This association might be accomplished, for example, by embedding the verification of the image to the animation service. Alternatively, the association might be accomplished by encoding the verification of the image in the animation service.

Still further, the second embodiment illustrated in Figure 2 might further comprise the step of associating the identity of the requestor with the animation service. This association might be accomplished, for example, by embedding the identity of the requestor to the animation service. Alternatively, the association might be accomplished by encoding the identity of the requestor in the animation service.

Yet further, the second embodiment illustrated in Figure 2 might further comprises the step of associating the verification of the identity of the requestor with the animation service. This association might be accomplished by embedding the verification of the identity of the requestor to the animation service. Alternatively, the association might be accomplished by encoding the verification of the identity of the requestor in the animation service.

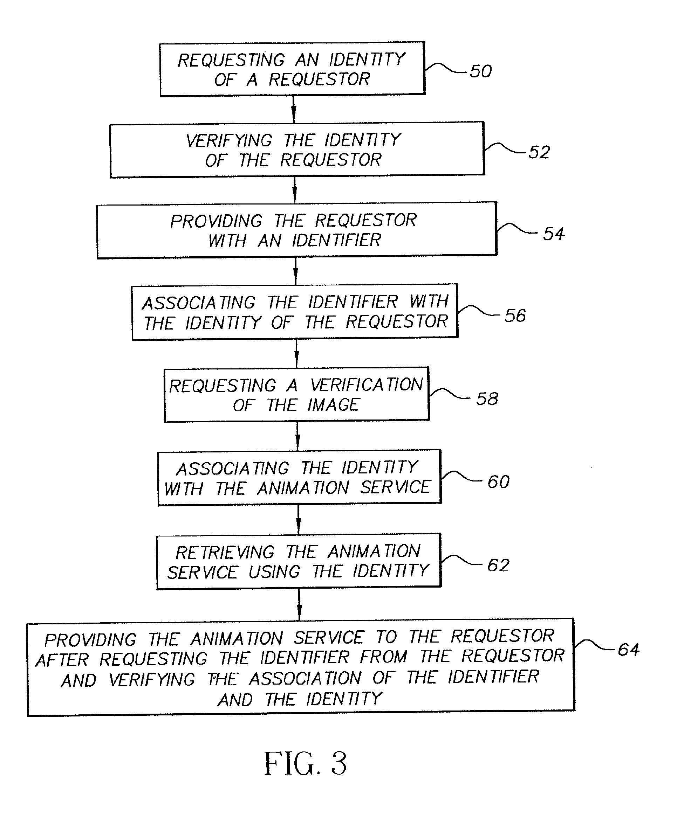

The second embodiment illustrated in Figure 3 employs identifier ID. Once the animation service is requested, the store would request the identity of the requestor (step 50) by requesting personally-identifiable information. As discussed above, the personally-identifiable information could include a name, mailing address, phone number, electronic mailing address, drivers license, hobby information, and payment information. The personally-identifiable information could be provided by means of a form, and the requestor would complete the form and submit it to the store, either in paper form or electronic form.

The store would then verify the identity of the requestor (step 52). This verification may be, for example, a drivers license, photo identification, credit cart, bank statement, birth certificate, passport. Though preferably, the verification includes both the requestor's name and an image.

The store would provide the requestor with identifier ID (step 54). Identifier ID could be provided immediately, on-line, or alternatively, provided to the requestor by mail. Identifier ID may be comprised of alphanumeric or iconic characters, and is preferably unique. Identifier ID is associated with the identity of the requestor (step 56).

The store would then request a verification of the image (step 58) of which the animation service is being requested. The step of requesting the verification of the image can comprise providing a signed statement indicating ownership of the image. The signed statement might be notarized. It might be signed by the requestor or by a subject of the image. Alternatively, the step of requesting the verification of the image can comprise providing an oral statement indicating ownership of the image. The oral statement might be made by the requestor or by a subject of the image. As indicated above, the verification of the image might comprise a review of the copyright ownership of the image.

The identity of the requestor is associated with the animation service (step 60). When the animation service has been completed, the requestor visits the store and provides the requestor's identity to the store. The store uses the identity to retrieve the animation service (step 62). The animation service is provided to the requestor after requesting identifier ID from the requestor and verifying the association of identifier ID and the identity (step 64).

The embodiment illustrated in Figure 3 might further comprise the step of associating the verification of the image with the animation service. This association might be accomplished, for example, by embedding the verification of the image to the animation service. Alternatively, the association might be accomplished by encoding the verification of the image in the animation service.

Still further, the second embodiment illustrated in Figure 3 might further comprise the step of associating the identity of the requestor with the animation service. This association might be accomplished, for example, by embedding the identity of the requestor to the animation service. Alternatively, the association might be accomplished by encoding the identity of the requestor in the animation service.

Yet further, the second embodiment illustrated in Figure 3 might further comprises the step of associating the verification of the identity of the requestor with the animation service. This association might be accomplished by embedding the verification of the identity of the requestor to the animation service. Alternatively, the association might be accomplished by encoding the verification of the identity of the requestor in the animation service.

A third embodiment is now described directed to a method of securing an animation service wherein a third level of security is defined.

A third level of security may be desired, for example, when requesting an animation service from a photostudio, particularly wherein the image to be animated was taken at the photostudio providing the animation service by a professional photographer. And more particularly if the subject of the image is the requestor. However, as noted with the first and second embodiments, the requestor may or may not be the subject of the facial animation requested by the animation service.

The requestor visits the photostudio staffed by a professional photographer. The photographer would capture the image of the requestor using an image capture device (step 70). The image capture device can capture the image in digital form, such as a digital camera or camcorder capturing the image on a floppy disk or memory card. Alternatively, the image can be captured on photosensitive film and converted to digital form using a scanner or other converting device.

Once the image has been captured, the photographer might show the requestor the animation services available and the requestor may browse among the available options. These might include, for example, services wherein the requestor would talk or provide a special greeting such as a birthday message. Upon the requestor requesting the animation service (step 72), the photographer would provide a verification of the captured image (step 74).

The step of providing the verification of the image can comprise providing a signed statement indicating the name of the photographer which captured the image, the date taken, the location taken, or any characteristic related to the image as captured by the photographer. The signed statement might be notarized. Alternatively, the verification of the image can comprise providing an oral statement indicating ownership of the image. Alternatively, the verification can further be provided by the requestor.

Once the animation service is completed, the photographer may provide the animation service to the requestor (step 76).

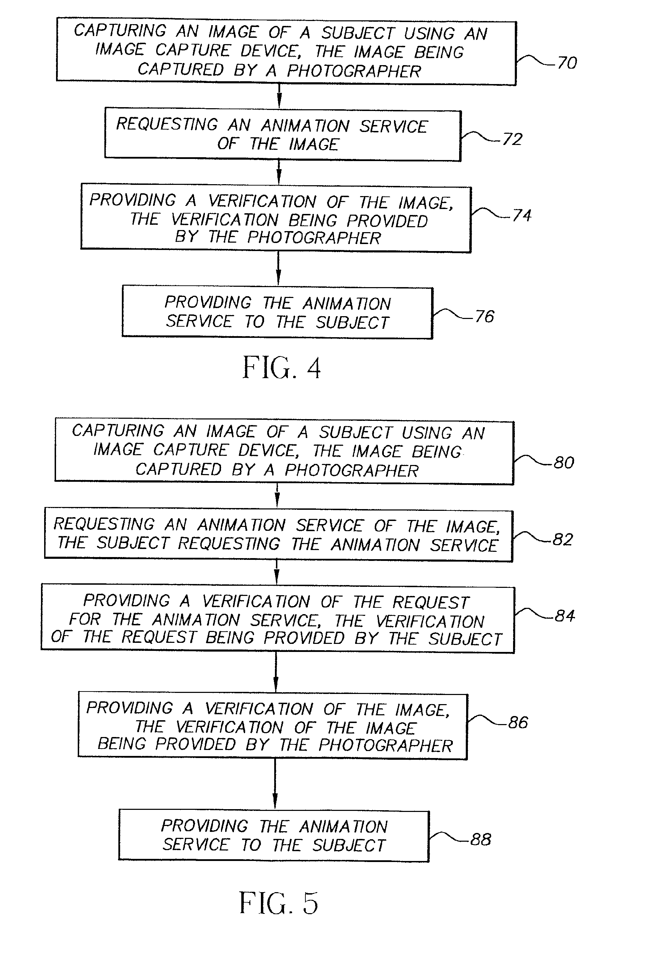

The method illustrated in Figure 4 can further comprise the step of associating the verification of the image to the animation service. This association can be accomplished by affixing the verification of the image to the animation service. Alternatively, the step of associating the verification of the image to the animation service can comprise encoding the verification of the image in the animation service.

The method illustrated in Figure 4 can further comprise the step of requesting proof of the identity of the requestor.

Still further, the method illustrated in Figure 4 can comprise the step of providing a verification of the animation service request. The verification of the animation service request is provided by the photographer or provided by the requestor.

Figure 5 shows the third embodiment wherein further comprising the step of providing a verification of the animation service request.

The requestor visits the photostudio staffed by the professional photographer. The photographer captures the image of the requestor using an image capture device (step 80). The requestor requests an animation service (step 82). The requestor then provides a verification of the request (step 84), thereby providing authorization and confirmation of the request. The photographer provides a verification of the image (step 86). Once the animation service is completed, the photographer may provide the animation service to the requestor (step 88).

The method illustrated in Figure 5 may further comprise the step of associating the verification of the image to the animation service. This may be accomplished by attaching the verification of the image to the animation service or by encoding the verification of the image to the animation service.

The method illustrated in Figure 5 may further comprise the step of associating the verification of the request to the animation service. This may be accomplished by attaching the verification of the request to the animation service or by encoding the verification of the request in the animation service.

## Claims

1. A method of securing an animation service, comprising:
providing a requestor with an identifier;
associating the identifier with an identity of the requestor;
associating the identity and identifier with the animation service;
using the identity to retrieve the animation service;
requesting the identifier from the requestor, and
providing the animation service to the requestor after verifying the association of the identifier and the identity.

2. A method of verifying a request for an animation service, comprising:
providing a requestor with the identifier;
associating the identifier with an identity of the requestor;
requesting the animation service;
associating the identity and identifier with the animation service;
using the identity to retrieve the animation service; and
providing the animation service to the requestor after requesting the identifier from the requestor and verifying the association of the identifier and the identity.

3. A method of securing an animation service of an image, comprising:
requesting an identity of the requestor;
requesting a verification of the identity of the requestor;
requesting a verification of the image;
associating the identity with the animation service;
using the identity to retrieve the animation service; and
providing the animation service to the requestor.

4. A method of securing an animation service of an image, comprising:
requesting an identity of a requestor;
verifying the identity of the requestor;
providing the requestor with an identifier;
associating the identifier with the identity of the requestor;
requesting a verification of the image;
associating the identity with the animation service;
retrieving the animation service using the identity; and
providing the animation service to the requestor after requesting the identifier from the requestor and verifying the association of the identifier and the identity.

5. A method of securing an animation service, comprising:
capturing an image of a subject using an image capture device, the image being captured by a photographer;
requesting an animation service of the image;
providing a verification of the image, the verification being provided by the photographer; and
providing the animation service to the subject.

6. A method of securing an animation service, comprising:
capturing an image of a subject using an image capture device, the image being captured by an photographer;
requesting an animation service of the image, the subject requesting the animation service;
providing a verification of the request for the animation service, the verification of the request being provided by the subject;
providing a verification of the image, the verification of the image being provided by the photographer; and
providing the animation service to the subject.
